# EUROPEAN PATENT SPECIFICATION

(11) **EP 1 988 541 B1**
(45) Date of publication and mention of the grant of the patent: **24.08.2016**
(21) Application number: 08155038.6
(22) Date of filing: 23.04.2008
(51) Int. Cl.: G09G 5/00

(54) **Data receiver, data transmitter, and information processing method and computer program relating to said data receiver and transmitter**
Datenempfänger, Datensender, und Informationsverarbeitungsverfahren und Computerprogramm in Zusammen hang mit benannten Datenempänger uns -sender
Récepteur de données, émetteur de données et procédé de traitement d'informations et programme informatique concernant lesdits récepteur et émetteur

(30) Priority: 25.04.2007 JP 2007115028
(43) Date of publication of application: 05.11.2008
(73) Proprietor: Sony Corporation, Tokyo (JP)
(72) Inventor: Nakahama, Masahiko, Tokyo (JP)
(74) Representative: Witte, Weller & Partner Patentanwälte mbB

(56) References cited:
- WO-A1-2009/001879
- US-A1- 2003 214 507
- US-A1- 2005 225 547
- US-A1- 2007 057 931
- US-A1- 2007 070 402
- STEVAN EIDSON ET AL: "30.2: HDMI: High-Definition Multimedia Interface" 2003 SID INTERNATIONAL SYMPOSIUM - MAY 20, 2003, BALTIMORE, MARYLAND, vol. XXXIV, 20 May 2003 (2003-05-20), page 1024, XP007008293

## Description

### BACKGROUND OF THE INVENTION

### 1. Field of the Invention

The present invention relates to a data receiver, a data transmitter, an information processing method, and a computer program, more particularly to a data receiver, a data transmitter, an information processing method, and a computer program for performing communications of a video signal or a control signal.

### 2. Description of the Related Art

HDMI (High Definition Multimedia Interface) is known as an interface standard for inputting and outputting a digital video and an audio. HDMI is the interface standard mainly aimed for inputting and outputting the digital video and the audio for a household appliance or an AV device. In particular, it has a configuration that DVI (Digital Visual Interface) of a digital interface used for connecting a personal computer with a display is further developed to transmit and receive a video signal, an audio signal, and a control signal together by one cable. A transmission side apparatus for performing contents transmission in compliance with a HDMI standard is referred to as a HDMI source and a contents receiving side apparatus is referred to as a HDMI sink.

US 2005/0225547 describes a transmission system based on the HDMI standard.

In HDMI, TMDS (Transition Minimized Differential Signaling) which is a digital transmission system for a display video signal employed for DVI is used for a physical layer, and high-speed digital data transmission may be realized. TMDS is one of the means differentially transmitting the digital data, and includes links consisting of four channels in total for transmitting three types of video signals R (Red) / G (Green) / B (Blue), and a reference clock signal. Each video signal performs serial conversion on parallel signal of a 10-bit, and transmits 10-bit data per clock cycle. For example, if a clock is set to 500 MHz, 5G bit video data can be sent per a second (effective transmission rate of HDMI verl.3 is 250 Mbps to 3.4 Gbps).

TMDS is a digital data transmission style which causes a pair of electric conductors, such as a twisted pair cable, to transmit the clock and NRZ (Non Return to Zero) data as differential signals. This type of transmission system has an advantage in that it is strong against variations in potential difference of a transceiver, can eliminate extraneous noises by common-mode voltage removal action, and can suppress unnecessary radiation. The transmission system can also be used for a high speed data transmission for a comparatively long distance of approximately 10-100 m.

Further, HDCP (High-bandwidth Digital Content Protection) is used as a contents protection system, such as illegal copy prevention of digital contents outputted and inputted by application of TMDS. In order to transmit the safe contents, before starting the contents transmission, an authentication process including a common process of an encryption key is performed between the transmitter (source) and a receiver (sink) of the content, The authentication process is performed through a bidirectional bus set up in a HDMI interface, i.e., an IIC line referred to as DDC (Display Data Channel). By applying the encryption key shared between the transmitter and receiver in the authentication process, a contents transmission side (source) encrypts transmission contents to be outputted to a receiving side (sink). The receiving side (sink) decodes and reproduces the encrypted contents received from the transmitting side by using the encryption key.

Furthermore, in the HDMI standard, a CEC (Consumer Electronics Control) line which is a two-way communication line between the transmitter (source) and the receiver (sink) is set to transmit user operation information on the transmitter (source) side or receiver (sink) side to a HDMI device via a CEC line, allowing various processes to be performed. For example, a power supply of TV is turned OFF by a remote control unit of TV being a receiver (sink), to realize "all-off" in which a power supply of a device connected to a HDMI terminal is also turned OFF. Further, contents replay is started on a video side and a power supply of a target device, such as TV, AMP, etc. is turned ON to realize one-touch play for switching to a connected HDMI input.

For example, the receiver (sink) as a contents reproduction device, such as TV can be connected with the transmitter (source) which is an apparatus for providing various contents. In particular, the apparatus includes a DVD player, a video tape-recorder, a tuner, etc. According to the HDMI standard, the transmitter (source) which is set to be selected by the receiver (sink) can obtain the information stored in a device information storing memory (EDID-ROM) provided to the receiver (sink). However, when the source is not in the selection state, the source in the non-selection state cannot obtain the information in the device information storing memory (EDID-ROM) of the sink. The device information storing memory (EDID-ROM) has stored therein resolution information of the contents which can be reproduced in the receiver (sink), signal format information which is accepted by a display, and the like. for example. When performing a process of transmitting the contents, the contents selection and data processing are performed in accordance with this information.

Further, a physical address (Physical address) which is required in order to perform the data communications is recorded in the device information storing memory (EDID-ROM) of the receiver (sink). The transmitter (source) obtains the physical address from the device information storing memory (EDID-ROM) of the receiver (sink), and performs an address mapping process enabling communications through HDMI. This address mapping is performed by using the CEC line which is the two-way communication line between the transmitter (source) and the receiver (sink) as described above.

As described above, however, according to the HDMI standard, the transmitter (source) which is not set to be selected by the receiver (sink) cannot obtain the information stored in the device information storing memory (EDID-ROM) provided to the receiver (sink), therefore the communications cannot be performed between the transmitter (source) which is not set as the selection state, and the receiver (sink) via the CEC line. In other words, the address mapping process, the all-off by means of the CEC, the one-touch play, etc. cannot be used at all.

### SUMMARY OF THE INVENTION

In view of the issues, the present invention is made and provides a data receiver, a data transmitter, an information processing method, and a computer program, in which irrespective of a selection state set up by a receiver (sink), a transmitter (source) is allowed to obtain device information from a memory of the receiver (sink), and communication of control information between the transmitter (source) in the non-selection state, and the receiver (sink) is enabled.

A first aspect of the present invention is a data receiver, as defined in claim 1, as a sink for receiving transmission contents from a source for performing a contents transmission process.

Further, in an embodiment of the data receiver in accordance with the present invention, the control unit has a configuration in which control is performed to temporarily change the setup to one indicating that the hot plug state is in a state where obtainment of the data stored in the memory is not permitted, and then rechange the setup to one indicating that the hot plug state is in a state where obtainment of the data stored in the memory is permitted, in the case where the source is changed to the selection state from the non-selection state in which the source is not selected as the contents input device.

Furthermore, in one embodiment of the data receiver of the present invention, the control unit has a configuration in which control is performed to temporarily change a setup to one indicating that the hot plug state is in the state where obtainment of the data stored in the memory are not permitted , in the case where the source is changed to the selection state from the non-selection state in which the source is not selected as the contents input device, and then rechange the setup to one indicating that the hot plug state is in the state where obtainment of the data stored in the memory is permitted, whereby setup of authentication start conditions between the source and the sink is performed.

Still further, in one embodiment of the data receiver of the present invention, it is arranged that address information to be applied to address mapping by the source is stored in the memory, and the control unit performs control to permit the source to read the address information stored in the memory, even in the non-selection state where the source is not selected as the contents input device.

Even further, in one embodiment of the data receiver of the present invention, it is arranged that the source and sink are connected by a HDMI (High Definition Multimedia Interface) cable, and the control unit has a configuration in which the hot plug state is set to be "high" in the selection state where the source is selected as the contents input device, to maintain the hot plug state to be "high" even in the case where the source is changed to the non-selection state from the selection state in which the source is selected as the contents input device, and to change the hot plug state to "low" temporarily when the source is changed to the selection state from the non-selection state in which the source is not selected as the contents input device, then to rechanged it to "high" again.

Furthermore, in one embodiment of the data receiver of the present invention, even in the non-selection state where the source is not selected as the contents input device, the control unit is arranged to perform control allowing information and communications process via a control information communications line between the source and the sink.

Still further, in one embodiment of the data receiver of the present invention, the control information communications line is a CEC (Consumer Electronics Control) line specified in a HDMI standard.

Even further, a second aspect of the present invention is a system, as claimed in claim 8, comprising a data receiver as disclosed herein and a data transmitter as a source which performs contents transmission to a sink.

Furthermore, a third aspect of the present invention is an information processing method, as claimed in claim 10, in a data receiver as a sink for receiving transmission contents from a source for performing a contents transmission process.

Moreover, in one embodiment of the information processing method in accordance with the present invention, the hot plug control step further includes a step of performing control to temporarily change the hot plug state to a setup indicative of being in a state where the data stored in the memory are not permitted to be obtained when the source is changed to the selection state from the non-selection state of not being selected as the contents input device, and then rechange the hot plug state again to the setup indicative of being in the state where the data stored in the memory are permitted to be obtained.

Further, a fourth aspect of the present invention is a computer program, as claimed in claim 13, for implementing an information process in a data receiver as a sink which receives transmission contents from a source which performs a contents transmission process.

In addition, the computer program of the present invention is a computer program which can be provided for a general-purpose computer system which can perform various program codes by, for example, a storage medium and a communication medium in a computer-readable form. By providing such a program in the computer-readable form, a process based on the program is realized on the computer system.

Further purposes, features, and advantages of the present invention will become clear by detailed description with reference to embodiments of the present invention to be described later and the accompanying drawings. In addition, in this specification, by system is meant a logical set structure of a plurality of apparatuses, and it is not limited to one that has apparatuses of respective structures in the same casing.

According to a structure of an embodiment of the present invention, even in the case where the source is changed from the state of being selected as the contents input device to the non-selection state, the state of the hot plug is set up to remain "high"; whereby the source in the non-selection state can obtain data in the device information storing memory (EDID-ROM) on the sink side, and it becomes possible to perform the address mapping process, to obtain the resolution information of the sink device, the acceptable format information, etc., and to perform various types of control accompanied by communications between the source and the sink by means of the CEC line, such as the all-off, the one-touch play, and the like, for example.

### BRIEF DESCRIPTION OF THE DRAWINGS

FIG. 1 is a diagram for explaining an outline of a HDMI (High Definition Multimedia Interface) standard;
FIG. 2 is a chart showing an example of data stored in a device information storing memory (EDID-ROM) on a sink side;
FIG. 3 is a chart showing an example of the data stored in the device information storing memory (EDID-ROM) on the sink side;
FIG. 4 is a diagram for explaining a specific example of an address mapping process using source physical addresses;
FIG. 5 is a diagram for explaining a structure of an apparatus and hot plug control on the sink side;
FIG. 6 is a chart showing an example of a known hot plug change state;
FIG. 7 is a chart showing an example of a hot plug change state in accordance with an embodiment of the present invention; and
FIG. 8 is a flow chart for explaining sequence of a hot plug change state processing in accordance with an embodiment of the present invention.

### DETAILED DESCRIPTION OF THE EMBODIMENTS

Hereafter, with reference to the drawings, a data receiver, a data transmitter, an information processing method, and a computer program in accordance with the present invention will be described in detail.

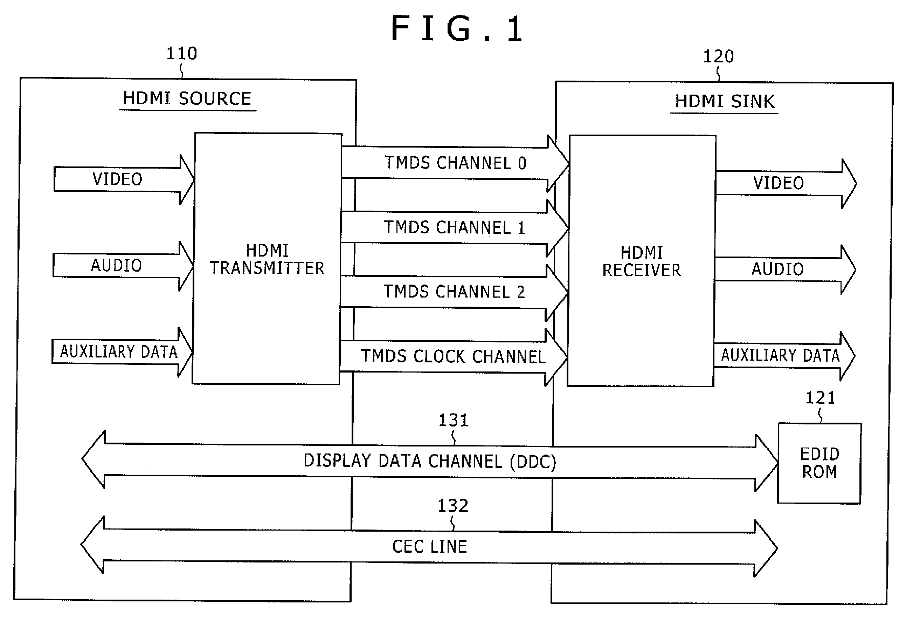

Firstly, with reference to FIG. 1, an outline of a HDMI (High Definition Multimedia Interface) standard will be described. FIG. 1 shows a transmitter [HDMI source] 110 which performs contents transmission in compliance with the HDMI standard, and a receiver [HDMI sink] 120 which receives contents.

As described above, HDMI uses TMDS (Transition Minimized Differential Signaling) which is a digital transmission system for a display video signal to enable realization of high-speed digital data transmission. TMDS is one of the means which carry out differential transmission of the digital data, and includes links consisting of four channels in total for three types of video signals (TMDS Channel 0-2) of R (Red) / G (Green) / B (Blue), and a transmission channel (TMDS clock channel) for a reference clock signal. Each video signal perform a serial conversion on parallel signal of 8-bit parallel signal, adds 2-bit redundant bits, and transmits 10-bit data per a clock cycle. An audio signal (Audio) is superimposed on a blanking section of an video signal (Video). For example, if the clock is set to be 500 MHz, 5G bit video data can be sent per a second (effective transmission rate of HDMI verl.3 is 250 Mbps to 3.4 Gbps).

In the HDMI sink (Sink) 120 which receives the contents transmitted from the HDMI source (Source) 110, a TMDS signal is decoded, the video signal (Video) and the audio signal (Audio) are decoded to perform a reproduction process.

As described above, HDCP (High-bandwidth Digital Content Protection) is used as a contents protection system for preventing illegal copy of digital contents outputted and inputted by application of TMDS. In order to transmit the contents safely, before starting the contents transmission, an authentication process including a share process of an encryption key is performed between the transmitter (source) and the receiver (sink) of the contents. The authentication process is performed through a bidirectional bus set up in a HDMI interface, i.e., an IIC line 131 referred to as DDC (Display Data Channel) as shown in FIG. 1. By applying the encryption key shared between the transmitter and receiver in the authentication process, on a contents transmission side (source), transmission contents are encrypted and outputted to a reception side (sink). The reception side (sink) decodes and reproduces the encrypted contents received from the transmitter side by using the encryption key.

Further, as shown in FIG. 1, in the HDMI standard, a CEC (Consumer Electronics Control) line 132 which is a two-way communication line between the transmitter (source) 110 and the receiver (sink) 120 is set. For example, user operation information on the transmitter (source) or receiver (sink) side is transmitted to a HDMI device through the CEC line 132 to enable various processes. In particular, a power supply of TV is turned OFF by a remote control unit of TV which is a receiver (sink), to realize "all-off" with which a power supply of a device connected to a HDMI terminal is also turned OFF together. On starting contents replay on a video side, a power supply for a target device, such as TV, AMP, etc. which are for connecting devices is turned ON to realize one-touch play which allows the contents to be reproduced.

As shown in FIG. 1, the receiver (sink) 120 has a device information storing memory (EDID-ROM) 121. The device information storing memory (EDID-ROM) 121 has stored therein resolution information of the contents which can be reproduced in the receiver (sink) 120, such as for example TV, signal format information which is accepted by a display, etc. For example, when performing a process of transmitting the contents, the transmitter (source) 110 performs contents selection and data processing according to this information.

A physical address (Physical address) which is required in order to perform the data communications by means of a HDMI cable is further recorded in the device information storing memory (EDID-ROM) 121, and the transmitter (source) 110 obtains the physical address from the device information storing memory (EDID-ROM) 121 of the receiver (sink) 120, and performs the address mapping process of enabling communications through HDMI. The address mapping is carried out by using the CEC line 132.

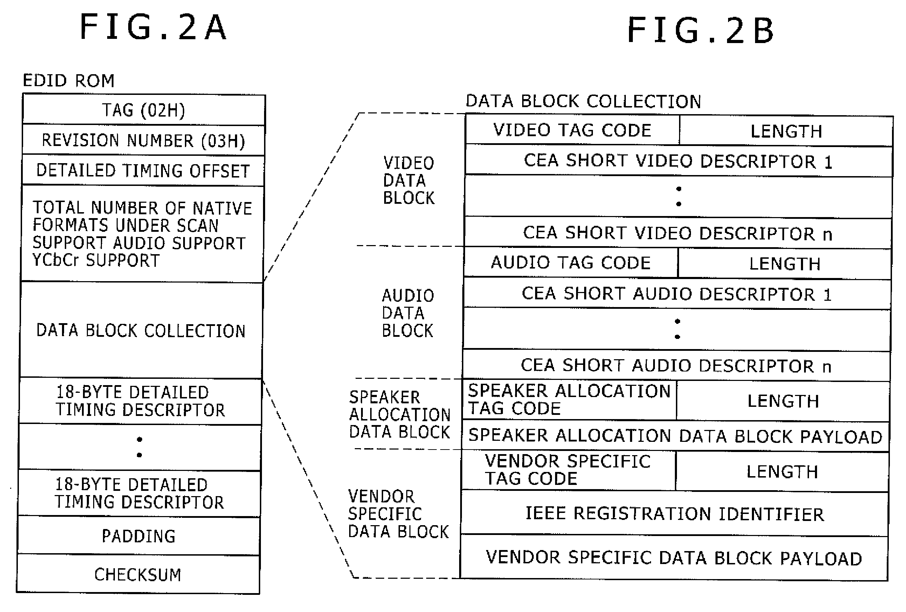

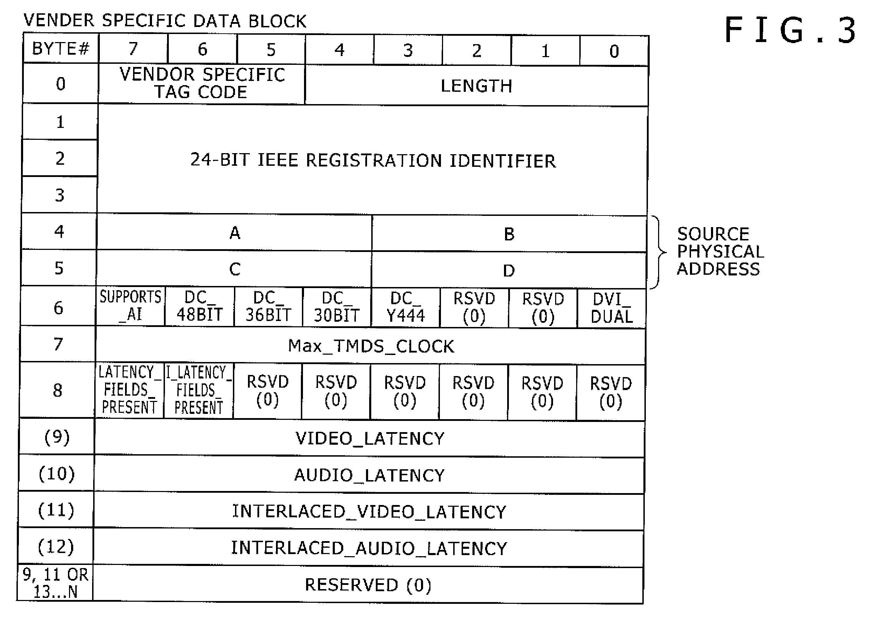

Examples of the data stored in the device information storing memory (EDID-ROM) 121 are shown in FIGS. 2 and 3. FIG. 2(a) is the whole structure of the data stored in the device information storing memory (EDID-ROM) 121, and FIG. 2(b) is a data structure of [Data block collection], being a part of the data. [Data block collection] includes [Video Data Block], [Audio Data Block], [Speaker Allocation Data Block], and [Vender Specific Block].

[Vender Specific Block] is a data area including an area in which data, such as Deep Color and Latency, can be written at a vendor of the HDMI devices, such as the HDMI receiver (sink), and has a data structure as shown in FIG. 3.

FIG. 3 illustrates a structure of [Vender Specific Block], and shows each of the stored data of bytes 0 - N from the upper row. A source physical address is stored at bytes 4 and 5. This source physical address is data used for the address mapping process for performing communications by means of the HDMI cable. The source physical address includes address information of four bits, each being A, B, C, and D.

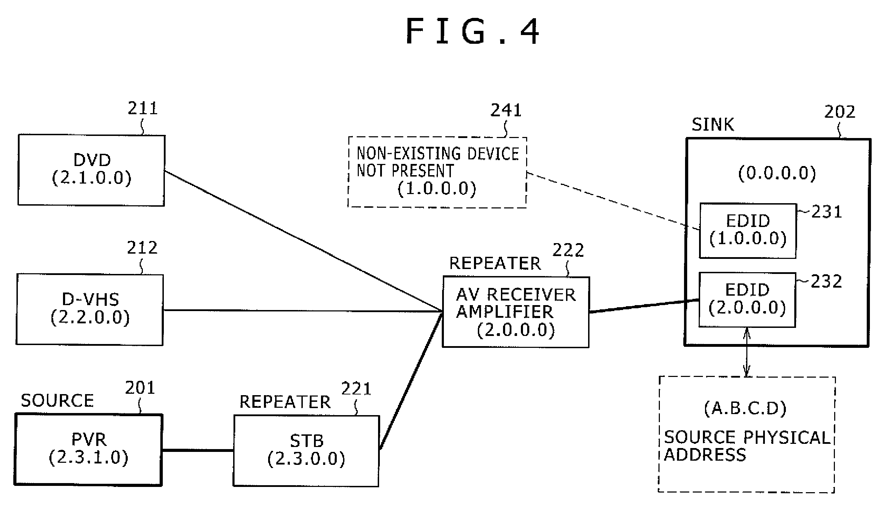

A particular example of the address mapping process using the source physical address will be described with reference to FIG. 4. FIG. 4 shows a source 201 which performs a contents transmission process, and a sink 202 which performs contents reception. Although the source 201 and the sink 202 may be connected directly, in many cases, other devices are interposed between the source 201 and the sink 202. These devices are referred to as repeaters. Repeaters 221 and 222 are shown in the figure.

As described above, the sink 202 can set a plurality of sources 201, 211, and 212 as contents input devices. The figure illustrates an example in which the sink 202 sets the source 201 as the contents input device. In this case, the selected source 201 obtains the physical address which is the data stored in the device information storing memory (EDID-ROM) of the sink 202, and performs the address mapping process. In addition, as shown in the figure, the sink 202 can store a plurality of physical addresses in the device information storing memory (EDID-ROM).

The physical address stored in the device information storing memory (EDID-ROM) contains therein address information on a higher side device to which the sink 202 is connected directly. In the example as shown in FIG. 4, the sink 202 has EDID 231 having stored therein a physical address (1.0.0.0) corresponding to a non-existing device 241, and EDID 232 having stored therein a physical address (2.0.0.0) corresponding to the repeater 222.

By way of the address mapping process performed by the source 201, an address is set to each of the source, the sink, and the repeater which perform communications through the HDMI cable. The physical address of the sink 202 as shown in the figure is set as (0.0.0.0), and an address is assigned to each device connected to the sink 202. In addition, four data which constitute the physical address (0.0.0.0) respectively correspond to the data A, B, C, and D constituting source address information which is described with reference to FIG. 3. In other words, it is set as 16-bit address information (A.B.C.D) of each four bit data.

As for the devices connected to the higher side of the sink 202 in which the physical address (0.0.0.0) is set, addresses, such as (1.0.0.0), (2.0.0.0.), (3.0.0.0), ... whose top address A is incremented like 1, 2, 3, ... are set. In other words, the sink is set as (A, B, C, D) = (0.0.0.0), and each device higher by one is provided with the physical address where the value of A is set as 1, 2, 3, ...

As for the device which is connected to a still higher rank than the high rank device connected to the sink, the address is set such that the value of A is set to the same value as that of A of the connection device and the value of B is set as 1, 2, 3, ... In the example of the figure, there are three devices connected to the higher order than the repeater 222 in which the physical address (2.0.0.0) is set. The addresses of these three devices are set as (2.1.0.0), (2.2.0.0), and (2.3.0.0). Further, the physical addresses are set up where A and B of the physical addresses of the device connected to the higher rank and the device connected to the lower rank are same and the value of C is varied as 1, 2, and 3. In the example in the figure, it is arranged that the source 201 is connected to the higher rank of the repeater 221 having the physical address (2.3.0.0), and the physical address of this source 201 is set to be (2.3.1.0).

The source 201 reads the source physical address (2.0.0.0) stored in EDID 232 prior to transmitting the contents to the sink 202, sets this address to the repeater 222, set an address in compliance with the rule to the higher rank device . In other words, by way of a process where an address in which B of (A, B, C, D) is sequentially varied is set up and an address in which the value of C is changed is set for a still higher rank device, the address corresponding to each device is set up to perform address mapping of a network connection device, whereby a contents transmitting path with respect to the sink 202 is determined. An example shown in FIG. 4 illustrates a communication path (source 201 → repeater 221 → repeater 222 → sink 202). In addition, this address mapping process is carried out by using the CEC line 132 shown in FIG. 1.

For example, for the sink 202 which is the contents reproduction device, such as TV, it is possible to select as the contents input device of the transmitter (source) which is an apparatus for providing various contents. In particular in the example FIG. 4, the source 211 as a DVD player, the source 212 as a video tape-recorder, and the source 201 as PVR can be selected as the sources.

According to the HDMI standard, the source in which the sink 202 is set to be selective state, can obtain the information stored in the device information storing memory (EDID-ROM) provided for the sink. However, in the case where the source is not in selection state of the sink, a non-selection source cannot obtain the information stored in the device information storing memory (EDID-ROM). As described above, the resolution information on the contents which can be reproduced in the sink (for example), the signal format information which is accepted by the display, and the physical address information applied to the address mapping, etc. are stored in the device information storing memory (EDID-ROM). When performing the process of transmitting the contents, the address mapping process according to this information is carried out, to establish a contents transmitting route and to carry out the contents selection and data processing applicable to the sink.

As described above, however, according to the HDMI standard, the transmitter (source) which is not set the receiver (sink) to the selection state cannot obtain the information stored in the device information storing memory (EDID-ROM) provided with the receiver (sink), therefore, the process through the CEC line cannot be performed between the non-selection state source and the sink. In other words, the address mapping process, the all-off by using the CEC, the one-touch play, etc. cannot be used at all.

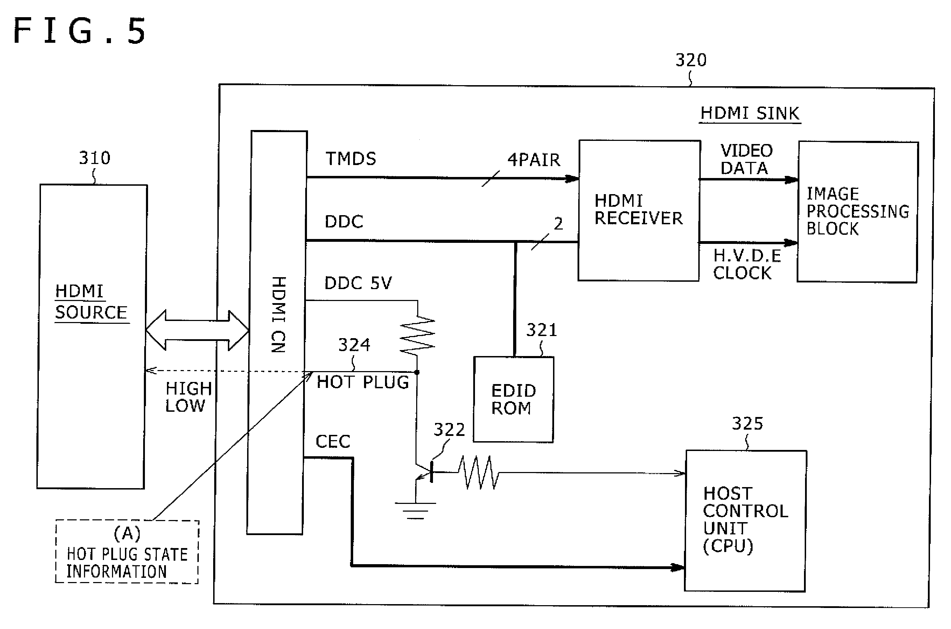

By inputting the information as to whether or not sink side is at selection state, each source can obtain the information stored in the device information storing memory (EDID-ROM), only when the selection state is confirmed. An apparatus structure on this mechanism, i.e., the sink side, and hot plug control will be described with reference to FIG. 5.

FIG. 5 is a figure showing a detailed structure of a receiver (sink) 320. The receiver is connected with a contents transmitter (source) 310 by means of the HDMI cable. In addition, as described with reference to FIG. 4, the repeater may exist between the source and the sink.

A host control unit (CPU) 325 of the receiver (sink) 320 controls a base voltage of a transistor 322 according to selection of the source, and changes a state of the hot plug 324 connected with the source to a high state or a low state. The state of this hot plug 324 is notified to the hot plug detection terminal of the source 310 through the HDMI cable, and the source 310 can determine whether or not the source is selected as the contents input device.

The source 310 performs various processes according to the state of this hot plug detection terminal. In other words, mutual authentication processing between the source and the sink, address mapping performed by reading and implementing data in EDID-ROM 321 having stored therein the source physical address, etc. are carried out.

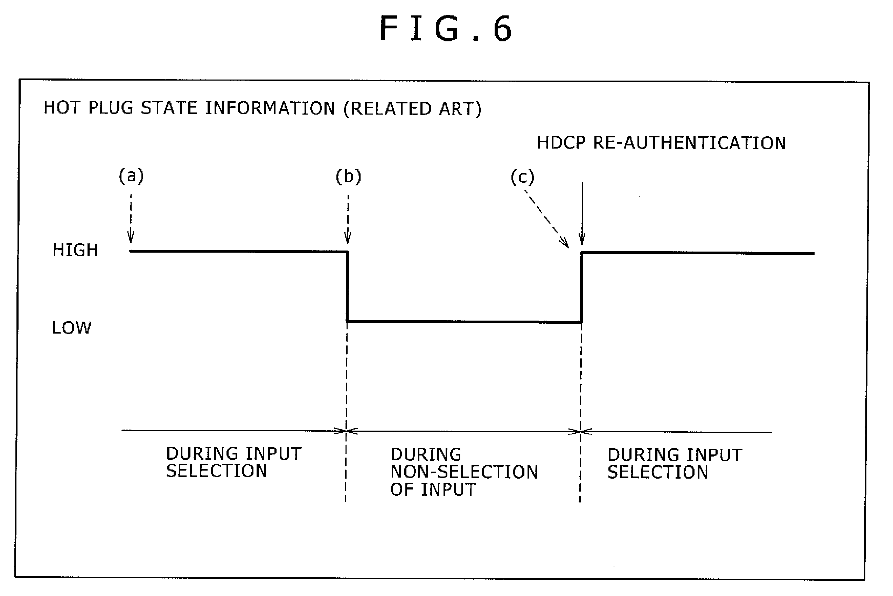

The host control unit (CPU) 325 of the receiver (sink) 320 controls the base voltage of the transistor 322, and changes the state of the hot plug 324. An example of transition of the hot plug state is shown in FIG. 6. A section "ab" is a period when the source is in the selection state as the contents input device, during the time period, the host control unit (CPU) 325 sets the state of the hot plug 324 as "high". In this selection state, the selection source is allowed to read the data in EDID-ROM 321.

A section "bc" is a time period when the source in a non-selection state as the contents input device, and during this time period, the state of the hot plug 324 is set to "low", and during this period, the non-selection source is not allowed to read the data in EDID-ROM 321.

Further, a point "c" is a point at which the source is again set as the selection state as the contents input device. At a timing when this non-selection state is changed to the selection state, the authentication process is started which is the authentication process specified to be performed between the selection source and the sink. After completion of the authentication process, substantive processes, such as the contents transmission etc. are permitted.

However, as described above, only when the hot plug is in the "high" state, it is permitted to read record data from the device information storing memory (EDID-ROM) on the sink side, on the other hand, the reading is not permitted in the non-selection state. This is specified in [HDMI Ver1.3 Specification] which specifies the standard of HDMI, for example.

Therefore, the source in the non-selection state cannot obtain the data stored in the device information storing memory (EDID-ROM) of the sink device, and it is in a state where it is not possible to perform the address mapping process as described above with reference to FIG. 3, or to obtain information, such as resolution information and format information to be accepted by the sink device, such as TV, or the like.

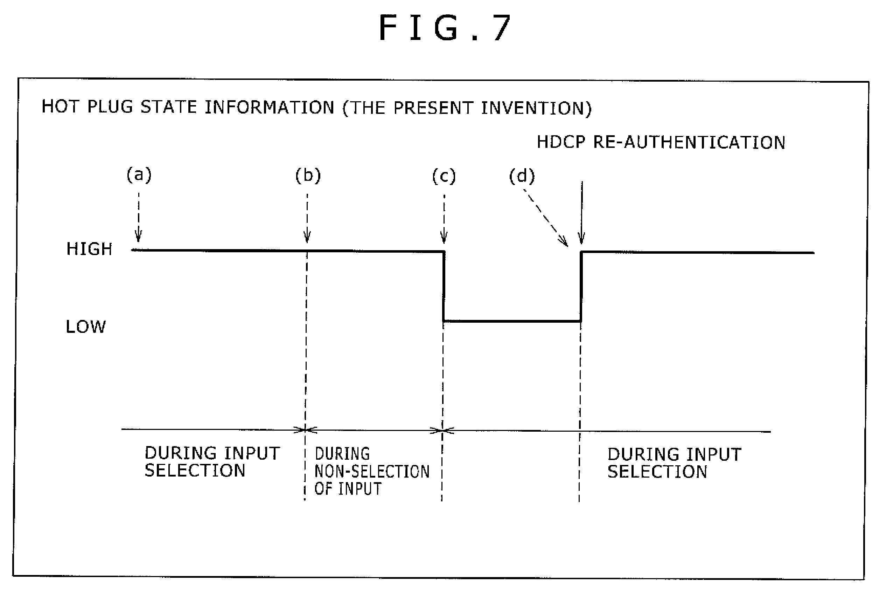

In the structure of the present invention, control as described below is performed in order to avoid such a situation. FIG. 7 shows a state transition diagram of the hot plug according to the present invention. A transition process of the hot plug state as shown in FIG. 7 is performed under control of a host control unit 325 of the HDMI sink 320 as described with reference to FIG. 5.

The section "ab" shown in FIG. 7 is a period when the source is in the selection state as the contents input device, during which time the host control unit (CPU) 325 sets the state of the hot plug 324 as "high". In this selection state, the selection source is allowed to read the data in EDID-ROM 321.

The point"b" is a timing at which the source is changed from the state of being selected as the contents input device to the non-selection state. For example, there may be mentioned the case where a user operates a remote control unit of TV which is a sink, to switch the source devices. In the example as described above with reference to FIG. 6, at a timing when the source is thus changed from the state of being selected as the contents input device to the non-selection state, the host control unit (CPU) 325 of the sink 320 performs the control to change the state of the hot plug 324 from "high" to "low".

In the structure of the present invention, at the timing (FIG. 7(b)) when the source is changed from the state of being selected as the contents input device to the non-selection state, the host control unit (CPU) 325 of the sink 320 performs the control to maintain the state of the hot plug 324 in the "high" state without changing from "high" to "low". This control allows the source in the non-selection state to read the data in EDID-ROM 321.

Further, the point "c" is the point at which the source is again set as the selection state as the contents input device. At the timing when this non-selection state is changed to the selection state, the host control unit (CPU) 325 of the sink 320 changes the state of the hot plug 324 from "high" to "low" and changes again the state of the hot plug 324 from "low" to "high" at the point (d).

In other words, when the source is changed from the non-selection state to the selection state, a process is carried out in which the state of the hot plug 324 is temporarily changed to "low" then rechanged to "high". At a timing (FIG. 7(d)) when the hot plug state is changed from "low" to "high", the authentication process is started between the selection source and the sink. After completion of the authentication process, the substantive processes, such as the contents transmission etc. are permitted.

Thus, the control unit of the data receiver of the present invention, i.e., the data receiver as the sink which receives the transmission contents from the source which performs the contents transmission process, changes the setup of the hot plug state which can be detected by the source, as a process of notifying the source of whether or not the data stored in the device information storing memory (EDID-ROM) are obtainable, sets the hot plug state as "high" indicative of being in the state where the data stored in the memory are permitted to be obtained, in the selection state where the source is selected as the contents input device, and is controlled to maintain the setup of "high" even in the case where the source is changed to the non-selection state from the selection state of being selected as the contents input device. Further, when the source is changed to the selection state from the non-selection state where the source is not selected as the contents input device, the control is carried out such that the hot plug state is temporarily changed to the setup of "low" indicative of being in the state where obtainment of data stored in the memory is not permitted to be obtained, then to rechange to the setup of "high" again.

Even in the non-selection state where the source is not selected as the contents input device, by performing such control, the control unit of the sink performs the control to permit the source to read the address information stored in the device information storing memory (EDID-ROM). Even in the non-selection state where the source is not selected as the contents input device, by providing the state in which the address mapping is allowed, the control of allowing an information and communications process through the CEC (Consumer Electronics Control) line which is a control information communications line between the source and the sink is carried out.

In addition, the data transmitter as the source which transmits the contents to the sink has a hot plug detection unit for detecting the state of the hot plug connected with the sink, and a control unit for determining, according to the state detected by the hot plug detection unit, whether or not the data stored in the device information storing memory provided for the sink are obtainable and for reading the data stored in the device information storing memory according to the determination result. Even in the case where the source is in the non-selection state of not being selected as the contents input device with respect to the sink, the hot plug detection unit of the source detects the hot plug state which is in the setup where obtainment of the data stored in the device information storing memory is allowed, and the control unit of the source reads the data stored in the device information storing memory of the sink even during a period when the sink is in the non-selection state.

As described above with reference to FIG. 7, in the hot plug control process in accordance with the present invention, even in the case where the source is changed to the non-selection state from the state of being selected as the contents input device, the state of the hot plug 324 is maintained to "high", and therefore it becomes possible for the source in the non-selection state to read the record data in the device information storing memory (EDID-ROM) on the sink side. Further, as described before with reference to Fig. 3, it becomes possible to perform the address mapping process, and to obtain information, such as resolution information and format information acceptable by the sink device, such as TV, etc. Further, it becomes possible to perform various types of control accompanied by communications between the source and the sink by means of the CEC line 132 (see FIG. 1), such as for example the all off, the one-touch play, as described above.

Furthermore, in the case where the source which becomes once in the non-selection state is again set as the selection state, it is arranged that the state of the hot plug 324 is changed from "high" to "low", and further the state of the hot plug 324 is rechanged from "low" to "high" at the point (d), whereby as described with reference to FIG. 6, the authentication process which is specified to be performed in the case where the state of the hot plug 324 is changed from "low" to "high" is performed reliably, and the contents transmission process in which the security in compliance with the standard of HDCP (High-bandwidth Digital Content Protection) is secured is realized.

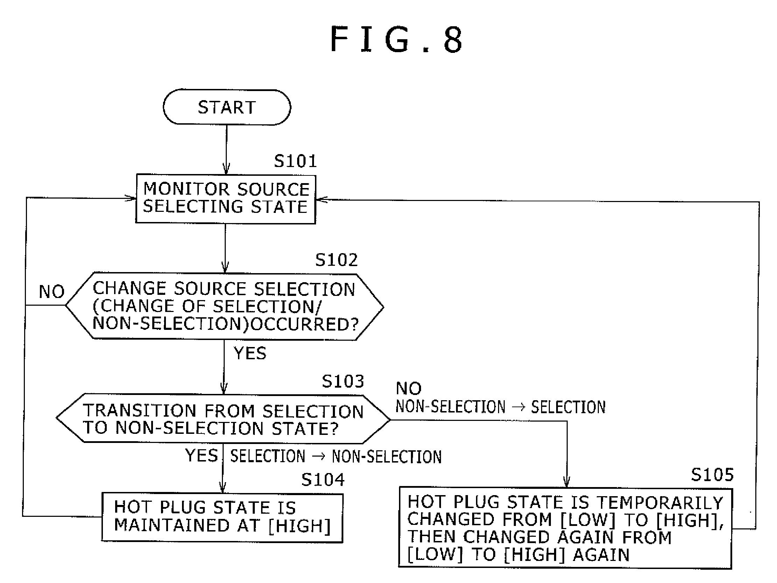

With reference to a flow chart as shown in FIG. 8, a sequence of the hot plug control process performed in the host control unit (CPU) 325 of the sink 320 will be described. Firstly, in step S101, the host control unit (CPU) 325 monitors the selection state of the source. In addition, a source selection state is switched by the remote control operation by a user etc., and determination is made based on these operation information.

In step S102, it is determined whether or not a change of the selection state of source is detected. In the case where it is detected, the process moves to step S103 and it is determined whether it is a change from the source selection state to the non-selection state or it is a change from a source non-selection state to the selection state.

In step S103, in the case where it is determined to be the change from the source selection state to the non-selection state, the process advances to step S104. In addition, this change corresponds to the point (b) shown in FIG. 7. In this case, in step S104, the control to maintain the hot plug state to be "high" is continued.

On the other hand, in step S103, in the case where it is determined to be the change from the source non-selection state to the selection state, the process moves to step S105. In addition, this change corresponds to the point (c) shown in FIG. 7. In this case, in step S105, the control is performed to temporarily change the hot plug state from "high" to "low" and then to change again from "low" to "high".

As above, the present invention is described in detail with reference to the specific examples. However, it is obvious that a person with an ordinary skill in the art can perform modification and substitution of the embodiments. In other words, the present invention is disclosed by way of exemplification, and it should not be interpreted limitedly.

Further, a series of processes as described in the present specification can be carried out by hardware, software, or a combination of both. When performing the process by software, the program having recorded therein a processing sequence can be implemented by installing it in the memory of the computer in which the dedicated hardware is built in. Alternatively, the program can be installed and executed in the general-purpose computer which can perform various processes. For example, the program can be recorded in a recording medium in advance. The program can be not only installed in the computer from the recording medium, programs can be also received through networks, such as LAN (Local Area Network) and the Internet to install the programs in recording media, such as a built-in hard disk.

It should be noted that various types of processes described in the present specification may be performed not only in chronological order according to the description but also in parallel or individually according to throughput of the apparatus for performing the processes or as needed. Further, in the present specification, by system means a logical set structure of a plurality of apparatuses, and it is not limited to one that has apparatuses of respective structures in the same casing.

As described above, according to the arrangement of one embodiment of the present invention, even in the case where the source is changed from the state of being selected as the contents input device to the non-selection state, the state of the hot plug is set up to remain "high", whereby the source in the non-selection state can obtain the data in the device information storing memory (EDID-ROM) on the sink side, and it becomes possible to perform the address mapping process, to obtain the resolution information on the sink device, the accepted format information, etc., and to perform various types of control accompanied by communications between the source and the sink by means of the CEC line, such as the all-off, the one-touch play, for example.

It should be understood by those skilled in the art that various modifications, combinations, sub-combinations and alterations may occur depending on design requirements and other factors insofar as they are within the scope of the appended claims.

The present document contains subject matter related to Japanese Patent Application No.2007-115028 filed in the Japanese Patent Office on April 25, 2007.

## Claims

1. A data receiver, said data receiver adapted to act as a sink capable of being connected to a plurality of sources and of selecting one of said sources as a contents input device, wherein the selected source is in a selection state and the other sources are in a non-selection state, the data receiver being adapted for receiving a transmission content from the selected source (310) performing a content transmission process, the data receiver (320) comprising:
a device information storing memory (321) for storing device information related to the data receiver; and
a control unit (325) for changing a setup of a hot plug (324) state, which can be detected by the source (310) selected as a contents input device, as a process of notifying said source (310) whether the data stored in the memory (321) can be obtained or not, wherein
the control unit (325) is arranged to set the hot plug state (324) as a setup indicative of being in a state where the data stored in the memory (321) is permitted to be obtained, when said source (310) is in the selected state,
**characterized in that** said control unit (325) is configured to maintain a setup showing that the hot plug (324) state is in a state where data stored in the memory (321) is permitted to be obtained, in a case where said source (310) is changed to the non-selection state from the selection state.

2. The data receiver according to claim 1, wherein
the control unit (325) has a configuration in which the hot plug (324) state is temporarily changed to a setup indicative of being in a state where the data stored in the memory (321) is not permitted to be obtained, and then control is performed to rechange the hot plug (324) state back to the setup indicative of being in the state where the data stored in the memory (321) is permitted to be obtained, when said source (310) is changed to the selection state from the non-selection state.

3. The data receiver according to claim 2, wherein
the control unit (325) has a configuration in which the hot plug (324) state is temporarily changed to the setup indicative of being in the state where the data stored in the memory (321) are not permitted to be obtained, and then control is performed to rechange the hot plug (324) state back to the setup indicative of being in the state where the data stored in the memory (321) is permitted to be obtained, whereby a setting of authentication start conditions between said source (310) and the sink (320) is performed.

4. The data receiver according to claim 1, wherein
the data stored in the memory (321) comprise address information which can be applied to address mapping by said source (310).

5. The data receiver according to claim 1, wherein
the control unit (325) has a configuration in which, even if said source (310) is in the non-selection state, control is performed to enable an information and communications process between the source (310) and the sink (320), via a control information communications line.

6. The data receiver according to claim 5, wherein
the control information communications line is a CEC line specified by a HDMI standard.

7. The data receiver according to claim 1,
further comprising an interface for connecting the data receiver with said source (310) by a HDMI cable.

8. A system comprising the data receiver according to claim 1 and at least said source (310) selected as a contents input device, wherein;
said source (310) and said data receiver (320) are connected by a HDMI cable, and
the control unit (325) has a configuration in which controls are performed;
to set the state of the hot plug (324) state to be High, when said source (310) is in the selection state,
to maintain a state where the hot plug (324) state is set to be High, even in the case where said source (310) is changed to the non-selection state from the selection state, and
to change the state of the hot plug (324) to Low temporarily, and then rechange the state of the hot plug (324) to High again, in the case where said source (310) is changed back to the selection state from the non-selection state.

9. A system comprising a data receiver according to claim 1 and a data transmitter as a source for transmitting contents to said data receiver (320), wherein the data transmitter comprises:
a hot plug detection unit for detecting a state of the hot plug (324) of the data receiver (320) connected with the data transmitter (310); and
a control unit for determining whether data stored in a device information storing memory (321) for storing device information related to the data receiver (320) may be obtained or not in accordance with a state detected by the hot plug detection unit, and reading the data stored in the device information storing memory (321) in accordance with a result obtained by the determination.

10. An information processing method in a data receiver as a sink (320) capable of being connected to a plurality of sources and of selecting one of said sources, wherein the selected source is in a selection state as a contents input device and the other sources are in a non-selection state, the data receiver being adapted for receiving transmission contents from the selected source for performing a contents transmission process, wherein:
as a process of notifying the source (310) selected to perform a contents transmission process whether data stored in a device information storing memory (321) for storing device information related to the data receiver (320) are obtainable or not, a control unit (325) performs a hot plug control step of changing a setup of a hot plug state, which can be detected by said selected source (310), wherein
the hot plug control step is a step of
setting the hot plug state as a state where obtainment of the data stored in the memory (321) is permitted, when said source (310) is in the selection state; **characterized in that** the hot plug control step comprises
performing control to maintain a setup where the hot plug state is in a state where obtainment of the data stored in the memory (321) are permitted, in a case where said source (310) is changed to the non-selection state from the selection state.

11. The information processing method according to claim 10, wherein
the hot plug control step includes a step of performing control to temporarily change the hot plug state to a setup indicative of a state where obtainment of the data stored in the memory is
not permitted, and then rechange the hot plug state again to the setup indicative of a state where obtainment of the data stored in the memory (321) is permitted, in the case where said source (310) is changed back to the selection state from the non-selection state.

12. The information processing method according to claim 10, wherein
said data receiver (320) is connected with said source (310) by a HDMI cable.

13. A computer program for implementing an information process in a data receiver as a sink (320) capable of being connected to a plurality of sources and of selecting one of said sources as a contents input device,
wherein the selected source is in a selection state and the other sources in a non-selection state, the data receiver being adapted for receiving transmission contents from the selected source for performing a contents transmission process, the computer program comprising:
a step of causing a control unit (325) to perform a hot plug control step of changing a setup of a hot plug state, which can be detected by the source (310) selected as a contents input device, as a process of notifying said source (310) whether data stored in a device information storing memory (321) for storing device information related to the data receiver (320) are obtainable or not; wherein:
the hot plug control step is a step of
setting the hot plug state as a setup indicative of being in a state where the data stored in the memory (321) are permitted to be obtained, when said source is in the selection state;
**characterized in that** the hot plug control step comprises
performing control to maintain a setup indicating that the hot plug state is in a state where obtainment of the data stored in the memory (321) are permitted, in the case where said source (310) is changed to the non-selection state from the selection state.

## Patentansprüche

1. Datenempfänger, der dazu ausgestaltet ist, als Senke zu agieren, die in der Lage ist, mit einer Vielzahl von Quellen verbunden zu werden und eine dieser Quellen als Inhaltseingangsgerät auszuwählen, wobei die ausgewählte Quelle in einem Auswahlzustand ist und die anderen Quellen in einem Nicht-Auswahlzustand sind, wobei der Datenempfänger zum Empfang von Sendeinhalt von der ausgewählten Quelle (310), die einen Inhaltssendeprozess durchführt, ausgestaltet ist, wobei der Datenempfänger (320) aufweist:
eine Geräteinformationsspeichereinheit (321) zum Speichern von auf den Datenempfänger bezogenen Geräteinformationen, und
eine Steuereinheit (325) zum Ändern einer Einstellung eines Hot-Plug (324) - Zustands, der von der als Inhaltseingangsgerät ausgewählten Quelle (310) detektiert werden kann, als ein Prozess der Benachrichtigung der Quelle (310), ob die in der Speichereinheit (321) gespeicherten Daten erhalten werden können oder nicht, wobei
die Steuereinheit (325) ausgestaltet ist, den Hot-Plug (324) - Zustand als eine Einstellung einzustellen, die anzeigt, dass ein Zustand vorliegt, in dem es gestattet ist, die in der Speichereinheit (321) gespeicherten Daten zu erhalten, wenn die Quelle (310) in dem ausgewählten Zustand ist,
**dadurch gekennzeichnet, dass** die Steuereinheit (325) ausgestaltet ist, eine Einstellung, die anzeigt, dass der Hot-Plug (324) - Zustand in einem Zustand ist, in dem es gestattet ist, die in der Speichereinheit (321) gespeicherten Daten zu erhalten, beizubehalten in einem Fall, in dem die Quelle (310) in den Nicht-Auswahlzustand von dem Auswahlzustand geändert wird.

2. Datenempfänger gemäß Anspruch 1, wobei
die Steuereinheit (325) eine Konfiguration aufweist, in der der Hot-Plug (324) - Zustand zeitweise geändert wird in eine Einstellung, die anzeigt, dass ein Zustand vorliegt, in dem es nicht gestattet ist, die in der Speichereinheit (321) gespeicherten Daten zu erhalten, und dann eine Steuerung durchgeführt wird, um den Hot-Plug (324) - Zustand wieder zurück in die Einstellung zu ändern, die anzeigt, dass ein Zustand vorliegt, in dem es gestattet ist, die in der Speichereinheit (321) gespeicherten Daten zu erhalten, wenn die Quelle (310) in den Auswahlzustand von dem Nicht-Auswahlzustand geändert wird.

3. Datenempfänger gemäß Anspruch 2, wobei
die Steuereinheit (325) eine Konfiguration aufweist, in der der Hot-Plug (324) - Zustand zeitweise geändert wird in die Einstellung, die anzeigt, dass der Zustand vorliegt, in dem es nicht gestattet ist, die in der Speichereinheit (321) gespeicherten Daten zu erhalten, und dann eine Steuerung durchgeführt wird, den Hot-Plug (324) - Zustand wieder zurück in die Einstellung zu ändern, die anzeigt, dass ein Zustand vorliegt, in dem es gestattet ist, die in der Speichereinheit (321) gespeicherten Daten zu erhalten, wobei ein Einstellen von Authentifizierungsstartbedingungen zwischen der Quelle (310) und der Senke (320) durchgeführt wird.

4. Datenempfänger gemäß Anspruch 1, wobei
die in der Speichereinheit (321) gespeicherten Daten Adressinformationen aufweisen, die auf Adresszuweisung von der Quelle (310) angewandt werden können.

5. Datenempfänger gemäß Anspruch 1, wobei
die Speichereinheit eine Konfiguration aufweist, in der, selbst wenn die Quelle (310) in dem Nicht-Auswahlzustand ist, eine Steuerung durchgeführt wird, um einen Informations- und Kommunikationsprozess zwischen der Quelle (310) und der Senke (320) über eine Informationskommunikationsleitung zu ermöglichen.

6. Datenempfänger gemäß Anspruch 5, wobei
die Steuerinformationskommunikationsleitung eine durch einen HDMI-Standard spezifizierte CEC-Leitung ist.

7. Datenempfänger gemäß Anspruch 1,
ferner aufweisend ein Interface zum Verbinden des Datenempfängers mit der Quelle (310) durch ein HDMI-Kabel.

8. System umfassend den Datenempfänger gemäß Anspruch 1 und wenigstens die als Inhaltseingangsgerät ausgewählte Quelle (310), wobei:
die Quelle (310) und der Datenempfänger (320) durch ein HDMI-Kabel verbunden sind, und
die Steuereinheit (325) eine Konfiguration aufweist, in der Steuerungen durchgeführt werden,
um den Zustand des Hot-Plug (324) - Zustands auf High einzustellen, wenn die Quelle (310) in dem Auswahlzustand ist,
um einen Zustand beizubehalten, in dem der Hot-Plug (324) - Zustand auf High eingestellt ist, sogar in dem Fall, in dem die Quelle (310) in den Nicht-Auswahlzustand von dem Auswahlzustand geändert wird, und
um den Zustand des Hot-Plugs (324) zeitweise auf Low zu ändern und dann den Zustand des Hot-Plugs (324) wieder auf High zurück zu ändern in dem Fall, in dem die Quelle (310) zurück in den Auswahlzustand von dem Nicht-Auswahlzustand geändert wird.

9. System aufweisend einen Datenempfänger gemäß Anspruch 1 und einen Datensender als eine Quelle zum Senden von Inhalten an den Datenempfänger (320), wobei der Datensender aufweist:
eine Hot-Plug-Detektionseinheit zum Detektieren eines Zustandes des Hot-Plugs (324) des Datenempfängers (320), der mit dem Datensender (310) verbunden ist, und
eine Steuereinheit zum Feststellen, ob in einer Geräteinformationsspeichereinheit (321) zum Speichern von auf den Datenempfänger (320) bezogenen Geräteinformationen gespeicherte Daten erhalten werden können oder nicht gemäß einem von der Hot-Plug-Detektionseinheit detektierten Zustand, und zum Lesen der in der Geräteinformationsspeichereinheit (321) gespeicherten Daten gemäß einem durch die Feststellung erhaltenen Ergebnis.

10. Informationsverarbeitungsverfahren in einem Datenempfänger als eine Senke (320), die in der Lage ist, mit einer Vielzahl von Quellen verbunden zu werden und eine der Quellen auszuwählen, wobei die ausgewählte Quelle in einem Auswahlzustand ist als ein Inhaltseingangsgerät und die anderen Quellen in einem Nicht-Auswahlzustand sind, wobei der Datenempfänger ausgestaltet ist zum Empfangen von Sendeinhalten von der ausgewählten Quelle zum Durchführen eines Inhaltssendeprozesses, wobei:
der Hot-Plug-Steuerungsschritt ein Schritt ist zur Einstellung des Hot-Plug-Zustands als ein Zustand, in dem Erhalt der in der Speichereinheit (321) gespeicherten Daten gestattet ist, wenn die Quelle (310) in dem Auswahlzustand ist,
**dadurch gekennzeichnet, dass** der Hot-Plug-Steuerungsschritt aufweist
Durchführen einer Steuerung, um eine Einstellung beizubehalten, in der der Hot-Plug-Zustand in einem Zustand ist, in dem Erhalt der in der Speichereinheit (321) gespeicherten Daten gestattet ist in einem Fall, in dem die Quelle (310) in den Nicht-Auswahlzustand von dem Auswahlzustand geändert wird.

11. Informationsverarbeitungsverfahren gemäß Anspruch 10, wobei
der Hot-Plug-Steuerungsschritt einen Schritt aufweist zum Durchführen einer Steuerung, um den Hot-Plug-Zustand zeitweise in eine Einstellung zu ändern, die einen Zustand anzeigt, in dem ein Erhalt der in der Speichereinheit gespeicherten Daten nicht gestattet ist, und dann den Hot-Plug-Zustand wieder in eine Einstellung zurück ändert, die einen Zustand anzeigt, in dem ein Erhalt der in der Speichereinheit (321) gespeicherten Daten gestattet ist in dem Fall, in dem die Quelle (310) zurück in den Auswahlzustand von dem Nicht-Auswahlzustand geändert wird.

12. Informationsverarbeitungsverfahren gemäß Anspruch 10, wobei
der Datenempfänger (320) mit der Quelle (310) durch ein HDMI-Kabel verbunden ist.

13. Computerprogramm zum Implementieren eines Informationsprozesses in einem Datenempfänger als eine Senke (320), die in der Lage ist, mit einer Vielzahl von Quellen verbunden zu werden und eine dieser Quellen als Inhaltseingangsgerät auszuwählen, wobei die ausgewählte Quelle in einem Auswahlzustand ist und die anderen Quellen in einem Nicht-Auswahlzustand sind, wobei der Datenempfänger zum Empfang von Sendeinhalten von der ausgewählten Quelle zur Durchführung eines Inhaltssendeprozesses ausgestaltet ist, wobei das Computerprogramm aufweist:
einen Schritt zur Veranlassung einer Steuereinheit (325) zur Durchführung eines Hot-Plug-Steuerungsschritts zum Ändern einer Einstellung eines Hot-Plug-Zustands, der von der als Inhaltseingangsgerät ausgewählten Quelle (310) detektiert werden kann, als ein Prozess der Benachrichtigung der Quelle (310), ob in der Geräteinformationsspeichereinheit (321) zum Speichern von auf den Datenempfänger (320) bezogenen Geräteinformationen gespeicherte Daten erhaltbar sind oder nicht, wobei
der Hot-Plug-Steuerungsschritt ein Schritt ist zur Einstellung des Hot-Plug-Zustands als eine Einstellung, die anzeigt, dass ein Zustand vorliegt, in dem es gestattet ist, die in der Speichereinheit (321) gespeicherten Daten zu erhalten, wenn die Quelle in dem Auswahlzustand ist,
**dadurch gekennzeichnet, dass** der Hot-Plug-Steuerungsschritt aufweist Durchführen einer Steuerung, um eine Einstellung beizubehalten, die anzeigt, dass der Hot-Plug-Zustand in einem Zustand ist, in dem Erhalt in der Speichereinheit (321) gespeicherten Daten gestattet ist in dem Fall, in dem die Quelle (310) in den Nicht-Auswahlzustand von dem Auswahlzustand geändert wird.

## Revendications

1. Récepteur de données, ledit récepteur de données étant adapté pour agir comme un puits capable d'être connecté à une pluralité de sources et de sélectionner l'une desdites sources en tant que dispositif d'entrée de contenu, dans lequel la source sélectionnée est dans un état de sélection et les autres sources sont dans un état de non-sélection, le récepteur de données étant adapté pour recevoir un contenu d'émission provenant de la source sélectionnée (310) mettant en oeuvre un processus d'émission de contenu, le récepteur de données (320) comprenant :
une mémoire de stockage d'information de dispositif (321) pour stocker une information de dispositif concernant le récepteur de données ; et
une unité de commande (325) pour changer un réglage d'un état de connexion à chaud (324), qui peut être détecté par la source (310) choisie en tant que dispositif d'entrée de contenu, sous la forme d'un processus de notification à ladite source (310) que les données stockées dans la mémoire (321) peuvent ou non être obtenues,
dans lequel l'unité de commande (325) est agencée de façon à établir l'état de connexion à chaud (324) en tant que réglage indicatif d'un état dans lequel les données stockées dans la mémoire (321) peuvent être obtenues, quand ladite source (310) est dans l'état sélectionné,
**caractérisé en ce que** ladite unité de commande (325) est configurée pour maintenir un réglage montrant que l'état de connexion à chaud (324) est un état dans lequel les données stockées dans la mémoire (321) peuvent être obtenues, dans le cas où ladite source (310) est changée de l'état de non-sélection à l'état de sélection.

2. Récepteur de données selon la revendication 1, dans lequel l'unité de commande (325) a une configuration dans laquelle l'état de connexion à chaud (324) est temporairement changé en un réglage indiquant un état dans lequel les données stockées dans la mémoire (321) ne peuvent pas être obtenues, après quoi une commande est effectuée pour changer de nouveau l'état de connexion à chaud (324) afin qu'il revienne au réglage indiquant un état dans lequel les données stockées dans la mémoire (321) peuvent être obtenues, quand ladite source (310) est changée de l'état de non-sélection à l'état de sélection.

3. Récepteur de données selon la revendication 2, dans lequel l'unité de commande (325) a une configuration dans laquelle l'état de connexion à chaud (324) est temporairement changé en le réglage indiquant l'état dans lequel les données stockées dans la mémoire (321) ne peuvent pas être obtenues, après quoi une commande est effectuée pour changer de nouveau l'état de connexion à chaud (324) afin qu'il revienne au réglage indiquant l'état dans lequel les données stockées dans la mémoire (321) peuvent être obtenues, en conséquence de quoi un établissement de conditions de début d'authentification entre ladite source (310) et le puits (320) est réalisé.

4. Récepteur de données selon la revendication 1, dans lequel les données stockées dans la mémoire (321) comprennent une information d'adresse qui peut être appliquée à une cartographie d'adresse par ladite source (310).

5. Récepteur de données selon la revendication 1, dans lequel l'unité de commande (325) a une configuration dans laquelle, même si ladite source (310) est dans l'état de non-sélection, une commande est effectuée pour permettre un traitement d'information et de communication entre la source (310) et le puits (320), via une ligne de communication d'information de commande.

6. Récepteur de données selon la revendication 5, dans lequel la ligne de communication d'information de commande est une ligne CEC spécifiée par une norme HDMI.

7. Récepteur de données selon la revendication 1, comprenant en outre une interface pour connecter le récepteur de données avec ladite source (310) au moyen d'un câble HDMI.

8. Système comprenant le récepteur de données selon la revendication 1 et au moins ladite source (310) sélectionnée en tant que dispositif d'entrée de contenu, dans lequel :
ladite source (310) et ledit récepteur de données (320) sont connectés au moyen d'un câble HDMI, et
l'unité de commande (325) a une configuration dans laquelle des commandes sont effectuées :
pour établir l'état de connexion à chaud (324) à un état haut quand ladite source (310) est dans l'état de sélection,
pour maintenir un état dans lequel l'état de connexion à chaud (324) est à un état haut,
même dans le cas où ladite source (310) est changée de l'état de sélection à l'état de non-sélection, et
pour changer temporairement la connexion à chaud (324) à un état bas, puis changer de nouveau la connexion à chaud (324) à un état haut, dans le cas où ladite source (310) est de nouveau changée de l'état de non-sélection à l'état de sélection.

9. Système comprenant un récepteur de données selon la revendication 1 et un émetteur de données servant de source pour émettre un contenu vers ledit récepteur de données (320), dans lequel l'émetteur de données comprend :
une unité de détection de connexion à chaud pour détecter un état de la connexion à chaud (324) du récepteur de données (320) connecté à l'émetteur de données (310) ; et
une unité de commande pour déterminer si des données stockées dans une mémoire de stockage d'information de données (321) pour stocker une information de dispositif concernant le récepteur de données (320) peuvent ou non être obtenues en fonction d'un état détecté par l'unité de détection de connexion à chaud, et lire les données stockées dans la mémoire de stockage d'information de dispositif (321) en fonction du résultat obtenu par la détermination.

10. Procédé de traitement d'information dans un récepteur de données sous la forme d'un puits (320) capable d'être connecté à une pluralité de sources et de sélectionner l'une desdites sources, dans lequel la source sélectionnée est dans un état de sélection sous la forme d'un dispositif d'entrée de contenu et les autres sources sont dans un état de non-sélection, le récepteur de données étant adapté pour recevoir un contenu d'émission provenant de la source sélectionnée pour effectuer un processus d'émission de contenu, dans lequel :
en tant que processus pour notifier à la source sélectionnée (310), de façon qu'elle effectue un processus d'émission de contenu, si des données stockées dans une mémoire de stockage d'information de dispositif (321) pour stocker une information de dispositif concernant le récepteur de données (320) peuvent ou non être obtenues, une unité de commande (325) effectue une étape de commande de connexion à chaud consistant à changer le réglage d'un état de connexion à chaud, qui peut être détecté par ladite source sélectionnée (310),
et dans lequel l'étape de commande de connexion à chaud est une étape consistant à établir l'état de connexion à chaud en tant qu'état dans lequel l'obtention des données stockées dans la mémoire (321) est autorisée, quand ladite source (310) est dans l'état de sélection ;
**caractérisé en ce que** l'étape de commande de connexion à chaud comprend la mise en oeuvre d'une commande pour maintenir un réglage dans lequel la connexion à chaud est dans un état dans lequel l'obtention des données stockées dans la mémoire (321) est autorisée, dans le cas où ladite source (310) est changée de l'état de sélection à l'état de non-sélection.

11. Procédé de traitement d'information selon la revendication 10, dans lequel l'étape de commande de connexion à chaud comprend une étape de réalisation d'une commande pour changer temporairement l'état de connexion à chaud à un réglage indicatif d'un état dans lequel l'obtention des données stockées dans la mémoire n'est pas autorisée, et ensuite changer de nouveau l'état de connexion à chaud au réglage indicatif d'un état dans lequel l'obtention des données stockées dans la mémoire (321) est autorisée, dans le cas où ladite source (310) est de nouveau changée de l'état de non-sélection à l'état de sélection.

12. Procédé de traitement d'information selon la revendication 10, dans lequel ledit récepteur de données (320) est connecté à ladite source (310) au moyen d'un câble HDMI.

13. Programme informatique pour exécuter un traitement d'information dans un récepteur de données sous la forme d'un puits (320) pouvant être connecté à une pluralité de sources et sélectionner l'une desdites sources en tant que dispositif d'entrée de contenu,
dans lequel la source sélectionnée est dans un état de sélection et les autres sources sont dans un état de non-sélection, le récepteur de données étant adapté pour recevoir un contenu d'émission provenant de la source sélectionnée pour effectuer un traitement de transmission de contenu, le programme informatique comprenant :
une étape pour que l'unité de commande (325) effectue une étape de commande de connexion à chaud consistant à changer le réglage d'un état de connexion à chaud, qui peut être détecté par la source (310) sélectionnée en tant que dispositif d'entrée de contenu, sous la forme d'un processus de notification à ladite source (310) que les données stockées dans une mémoire de stockage d'information de dispositif (321) pour le stockage d'une information de dispositif concernant le récepteur de données (320) peuvent ou non être obtenues ;
dans lequel :
l'étape de commande de connexion à chaud est une étape consistant à établir l'état de connexion à chaud comme un réglage indicatif d'un état dans lequel les données stockées dans la mémoire (321) peuvent être obtenues, quand ladite source est dans l'état de sélection ;
**caractérisé en ce que** l'étape de commande de connexion à chaud comprend la mise en oeuvre d'une commande pour maintenir un réglage indiquant que la connexion à chaud est dans un état dans lequel l'obtention des données stockées dans la mémoire (321) est autorisée, dans le cas où ladite source (310) est changée de l'état de sélection à l'état de non-sélection.
